# EUROPEAN PATENT APPLICATION

(11) **EP 2 857 943 A1**
(43) Date of publication of application: **08.04.2015**
(21) Application number: 12878191.1
(22) Date of filing: 30.07.2012
(51) Int. Cl.: G06F 3/048

(54) **METHOD AND DEVICE FOR PROVIDING VIRTUAL INPUT KEYBOARD**

(30) Priority: 31.05.2012 CN 201210176453
(71) Applicant: Baidu Online Network Technology (Beijing) Co., Ltd, Beijing 100085 (CN)
(72) Inventor: SUN, Peiluo, Beijing 100085 (CN)
(74) Representative: Delumeau, François Guy
(86) International application number: PCT/CN2012/079374
(87) International publication number: WO 2013/177861

(57) **Abstract**

The object of the present invention is to provide a method and apparatus for providing a virtual input keyboard. Specifically, the method comprises: obtaining a keyboard description information of the virtual input keyboard that is to be provided to a user; according to said keyboard description information, obtaining one or more keyboard objects corresponding to the virtual input keyboard and object resource information corresponding to each keyboard object; generating the virtual input keyboard based on the one or more keyboard objects and object resource information corresponding to each keyboard object; providing the virtual input keyboard to the user. Compared with the prior art, the present invention generates and provides a virtual input keyboard by obtaining corresponding one or more keyboard objects and object resource information corresponding to each keyboard object based on keyboard description information of the virtual input keyboard, so as to make it possible for the user to adjust his/her virtual input keyboard, thereby supporting enhancement of the input efficiency and improving the user's use experience.

## Description

### FIELD OF THE INVENTION

The present invention relates to the field of computer technologies, and more specifically, to a technology of providing a virtual input keyboard through a computer.

### BACKGROUND OF THE INVENTION

With the constant increase of computer hardware configurations and increasingly richer software applications, the traditional Internet applications, mobile Internet applications and various other applications have gained an expedite development. When using these applications, a user usually needs to use an input tool, such as a keyboard, a mouse, a virtual input keyboard. A virtual input keyboard is a software technology that may be used like a real keyboard and implemented through a computer. The virtual input keyboard is crucial for users who cannot use a keyboard due to health reasons and for users who use a device with a limited input device, e.g., various kinds of mobile terminals and portable terminals.

A virtual input keyboard can be implemented on different system platforms, e.g., Windows XP, Linux, Unix, iPhone OS, Android, Symbian OS, Pal OS, Windows Mobile, etc. For example, the small screen keyboard program of Windows XP is just a virtual input keyboard, which can be used like a real keyboard. In a digital product adopting a touch screen or a touch screen-like design, a user can use a virtual input keyboard of the digital product to input text and the like. However, the existing virtual input keyboard is substantially integrally set, i.e., a user generally can only replace the background image of the virtual input keyboard, e.g., the Sogou input method allows a user to change a skin, but does not support the user to adjust it, e.g., the user might wish to adjust the size of a virtual key thereof or its position in the entire virtual input keyboard. Correspondingly, the existing virtual input keyboard technology limits the user's input efficiency and affects the user's use experience.

### SUMMARY OF THE INVENTION

An objective of the present invention is to provide a method and apparatus for providing a virtual input keyboard.

According to another aspect of the present invention, there is provided a computer-implemented method for providing a virtual input keyboard, the method comprising steps of:

a. obtaining keyboard description information of a virtual input keyboard that is to be provided to a user;

b. according to said keyboard description information, obtaining one or more keyboard objects corresponding to said virtual input keyboard and object resource information corresponding to each keyboard object, wherein at least one of the one or more keyboard objects comprises an input hot zone for receiving user input operations to trigger corresponding input event(s);

c. generating said virtual input keyboard based on the one or more keyboard objects and object resource information corresponding to each keyboard object;

d. providing said virtual input keyboard to the user.

According to one aspect of the aspect, there is provided an apparatus for providing a virtual input keyboard, the apparatus comprising:

a first obtaining module configured to obtain keyboard description information of a virtual input keyboard that is to be provided to a user;

a second obtaining module configured to, according to said keyboard description information, obtain one or more keyboard objects corresponding to said virtual input keyboard and object resource information corresponding to each keyboard object, wherein at least one of the one or more keyboard objects comprises an input hot zone for receiving user input operations to trigger corresponding input event(s);

a generating module configured to generate said virtual input keyboard based on the one or more keyboard objects and object resource information corresponding to each keyboard object;

a providing module configured to provide said virtual input keyboard to the user.

Compared with the prior art, the present invention generates and provides a virtual input keyboard by obtaining corresponding one or more keyboard objects and object resource information corresponding to each keyboard object based on keyboard description information of the virtual input keyboard, so as to make it possible for the user to adjust his/her virtual input keyboard, thereby supporting enhancement of the input efficiency and improving the user's use experience. Moreover, the present invention may also perform adaptive processing to the object resource information based on the information such as the user equipment's screen attributes, such that the virtual input keyboard maintains a consistent appearance on a plurality of different platforms, which avoids reduction of the user's input efficiency due to keyboard layout difference caused by platform difference, thereby further enhancing the user's input efficiency and improving the user's input experience. Here, the "platform" recited in the present invention includes any device that may use the virtual input keyboard. Further, the present invention may also re-generate and provide the updated virtual input keyboard based on the user's adjustment operation on the virtual input keyboard, thereby further improving the user's input efficiency and enhancing the user's input experience. Particularly, the present invention may also combine relevant resource information and access or read into the memory once for all, which further enhances the communication or reading efficiency.

### BRIEF DESCRIPTION OF THE ACCOMPANYING DRAWINGS

Other features, objectives and advantages of the present invention will become more apparent through reading the detailed description of the non-limiting embodiments with reference to the accompanying drawings:
Fig. 1 shows a schematic diagram of an apparatus for providing a virtual input keyboard according to another aspect of the present invention;
Fig. 2 shows a schematic diagram of an apparatus for providing a virtual input keyboard according to one preferred embodiment of the present invention;
Fig. 3 shows a flow diagram of a computer-implemented method for providing a virtual input keyboard according to one aspect of the present invention;
Fig. 4 shows a flow diagram of a computer-implemented method for providing a virtual input keyboard according to one preferred embodiment of the present invention.

In the accompanying drawings, the same or similar reference numerals represent the same or similar components.

### DETAILED DESCRIPTION OF THE PREFERRED EMBODIMENTS

Hereinafter, the present invention will be described in further detail with reference to the accompanying drawings.

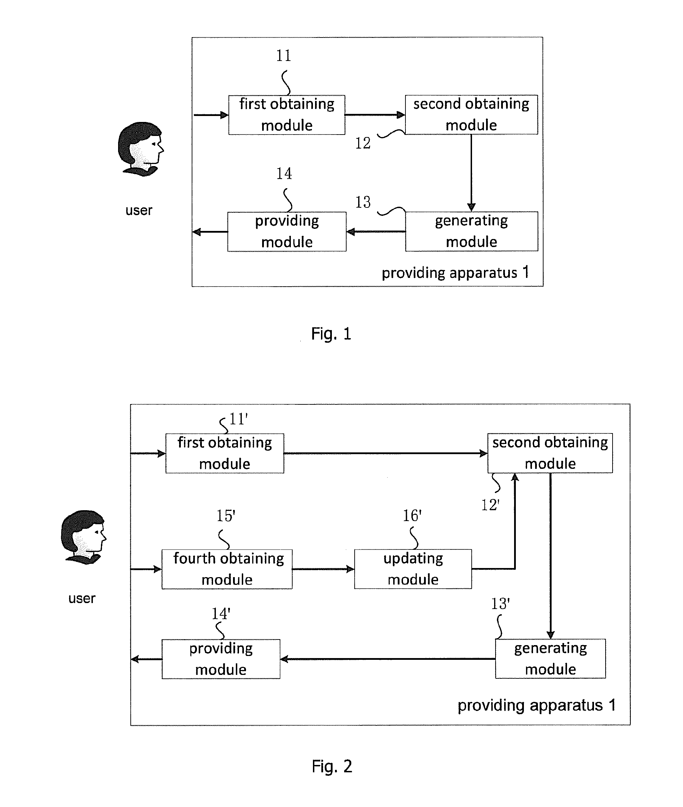

Fig. 1 shows an apparatus 1 for providing a virtual input keyboard according to another aspect of the present invention. Herein, the providing apparatus 1 comprises a server and a terminal. When the providing apparatus 1 comprises a server, the providing device 1 includes, but not limited to a single host machine, a small machine, a large machine, a plurality of host clusters, a network host machine, a single network server, a plurality of network server clusters, or a cloud composed of a plurality of servers. Here, the cloud is composed of a great number of computers or network servers based on cloud computing, wherein the cloud computing is a kind of distributed computation, and is a super virtual computer composed of a group of loosely coupled computer clusters. When the providing apparatus 1 comprises a terminal, the providing device 1 is any terminal that may perform human-machine interaction with the user through a virtual input keyboard, e.g., various kinds of computer, smart phones, PDA, tablet computer, IPTV terminal, a set top box, a game machine, etc.

As shown in Fig. 1, the providing apparatus 1 comprises a first obtaining module 11, a second obtaining module 12, a generating module 13, and a providing module 14.

Specifically, the first obtaining module 11 obtains keyboard description information of a virtual input keyboard that is to be provided to a user.

Herein, obtaining the keyboard description information includes, but not limited to:

1) relevant resource information, e.g., length and width information of a display screen for displaying a virtual input keyboard, various keys on the virtual input keyboard, and path information for storing skins, etc.;

2) virtual input keyboard layout information, e.g., length and width information of the virtual input keyboard, location information of the virtual input keyboard, numbers, kinds, and location information of keys of the virtual input keyboard, etc.

Herein, the manner of obtaining the keyboard description information includes, but not limited to:

1) obtaining locally: obtaining keyboard description information of a virtual input keyboard to be provided to the user from the local through an application program interface (API), or function invoking, or a local keyboard description information repository, wherein the local keyboard description information repository is used to store keyboard description information of the virtual input keyboard.

2) obtaining from the Internet: obtaining keyboard description information of the virtual input keyboard to be provided to the user from the Internet, through such as an application program interface (API), a remote process call protocol (RPC), or a network keyboard description information repository, or in an agreed communication manner such as HTTP, HTTPS, wherein the network keyboard description information repository is used to store keyboard description information of the virtual input keyboard.

For example, the first obtaining module 11 obtains keyboard description information of the virtual input keyboard to be provided to the user from the local. When the virtual input keyboard is actuated, the first obtaining module 11 obtains locally keyboard description information of the virtual input keyboard to be provided to the user through querying a local keyboard description information repository, e.g., the size of the virtual input keyboard is 90*120, the location is at the bottom of the display screen, and path information for storing resources corresponding to respective keys on the virtual input keyboard.

Those skilled in the art should understand that the aforesaid method of obtaining keyboard description information of a virtual input keyboard that is to be provided to the user from the local through querying a local keyboard description information repository is only exemplary, and other existing method of obtaining keyboard description information of a virtual input keyboard, or those that can possibly come out later should also be covered in the protection scope of the invention and included here in a way of quotation, if they are adaptable to this invention.

The second obtaining module 12 according to said keyboard description information, obtains one or more keyboard objects corresponding to said virtual input keyboard and object resource information corresponding to each keyboard object, wherein at least one of the one or more keyboard objects comprises an input hot zone for receiving user input operations to trigger corresponding input event(s). Here, the "more" in the present invention means two or more.

Herein, the keyboard object comprise the type, size, skin, display area, input hot zone of the keys on the virtual input keyboard, e.g., the key is rectangular, the size is 25*20 pixels, the skin is red, the display area is the bottom of the display screen, and the input hot zone is "water dripping sound", etc. The input hot zone triggers a corresponding input operation based on the user input operation receiving. The corresponding input operation includes display information and sound effect information. For example, the input hot zone corresponding to the .com key is that when the user clicks onto the .com key, water dripping sound effect information will be emitted on the virtual input keyboard.

Herein, the object resource information comprises a picture file, a sound effect file, and the like corresponding to each keyboard object.

Herein, the manner of obtaining one or more keyboard objects corresponding to the virtual input keyboard and object resource information corresponding to each keyboard object includes, but not limited to:

1) obtaining locally: obtaining keyboard description information of a virtual input keyboard to be provided to the user from the local through an application program interface (API), or function invoking, or a local keyboard object resource repository, wherein the local keyboard object resource repository is used for storing the keyboard object and its corresponding object resource information.

2) obtaining from the Internet; obtaining keyboard description information of the virtual input keyboard to be provided to the user from the Internet, through such as an application program interface (API), a remote process call protocol (RPC), or a network keyboard object resource repository, or in an agreed communication manner such as HTTP, HTTPS, wherein the local keyboard object resource repository is used for storing the keyboard object and its corresponding object resource information.

For example, the second obtaining module 12 obtains, from the network, one or more keyboard objects corresponding to the virtual input keyboard and their corresponding object resource information. When the virtual input keyboard is actuated, the first obtaining module 11 obtains, from the network, keyboard description information of the virtual input keyboard to be provided to the user in an agreed communication manner such as HTTP, HTTPS, by querying a network keyboard object resource repository via an application program interface (API), e.g., the size of the virtual input keyboard is 90*120, the location is at the bottom of the display screen, and path information for storing resources corresponding to respective keys on the virtual input keyboard is the network keyboard object resource repository, etc.; and the second obtaining module 12 obtains, from the network, one or more keyboard objects corresponding to the virtual input keyboard and their corresponding object resource information based on the obtained keyboard description information, in an agreed communication manner such as HTTP, HTTPS, and by querying the network keyboard object resource repository through the application program interface (API), e.g., obtaining the water dripping sound effect file s.mp3 of the input hot zone corresponding to the .com key.

Those skilled in the art should understand that the aforesaid method of obtaining one or more keyboard objects corresponding to the virtual input keyboard and object resource information corresponding to each keyboard object from the network by querying the network keyboard object resource repository is only exemplary, and other existing method of obtaining one or more keyboard objects corresponding to the virtual input keyboard and object resource information corresponding to each keyboard object base on the obtained keyboard description information, or those that can possibly come out later should also be covered in the protection scope of the invention and included here in a way of quotation, if they are adaptable to this invention.

The generating module 13 generates the virtual input keyboard based on the obtained one or more keyboard objects and object resource information corresponding to each keyboard object.

For example, the virtual input keyboard is generated based on the one or more keyboard objects and the object resource information corresponding to each keyboard object which are obtained from the network. The first obtaining module 11 obtains, from the network, keyboard description information of the virtual input keyboard to be provided to the user in an agreed communication manner such as HTTP, HTTPS, by querying a network keyboard object resource repository via an application program interface (API), e.g., the size of the virtual input keyboard is 90*120, the location is at the bottom of the display screen, and path information for storing resources corresponding to respective keys on the virtual input keyboard is the network keyboard object resource repository, etc.; and the second obtaining module 12 obtains, from the network, one or more keyboard objects corresponding to the virtual input keyboard and their corresponding object resource information based on the obtained keyboard description information, in an agreed communication manner such as HTTP, HTTPS, and by querying the network keyboard object resource repository through the application program interface (API), e.g., obtaining the water dripping sound effect file s.mp3 of the input hot zone corresponding to the .com key. The generating module 13 generates the virtual input keyboard based on the obtained one or more keyboard objects and their corresponding object resource information, e.g., the generating module 13 associates the input hot zone of the .com key with the water dripping sound effect file s.mp3, etc.

Those skilled in the art should understand that the aforesaid method of generating the virtual input keyboard based on the obtained one or more keyboard objects and object resource information corresponding to each keyboard object from the network is only exemplary, and other existing method of generating the virtual input keyboard based on the obtained one or more keyboard objects and object resource information corresponding to each keyboard object, or those that can possibly come out later should also be covered in the protection scope of the invention and included here in a way of quotation, if they are adaptable to this invention.

The providing module 14 provides the generated virtual input keyboard to the user.

Herein, the manner in which the providing module 14 provides the generated virtual input keyboard to the user includes, but not limited to:

1) locally providing. Presenting the locally generated virtual input keyboard on the display screen by invoking such as an application program interface (API) or invoking a graphical user interface (GUI), so as to provide which to the user.

2) network providing. Presenting the generated virtual input keyboard on the user equipment display screen from the network in an agreed communication manner such as HTTP, HTTPS via an application program interface (API) or a remote process call protocol (RPC), so as to provide which to the user, wherein the user equipment includes various computers, smart phones, PDA, tablet computer, IPTV terminal, set top box, game machine, etc.

For example, the providing module 14 presents the the generated virtual input keyboard on the display screen by invoking the graphical user interface (GUI) via local provision, so as to provide which to the user.

Those skilled in the art should understand that the above method of providing locally the generated virtual input keyboard is only exemplary, and other existing method of providing the generated virtual input keyboard, or those that can possibly come out later should also be covered in the protection scope of the invention and included here in a way of quotation, if they are adaptable to this invention.

Preferably, the respective modules of the providing apparatus 1 work continuously between each other. Specifically, the first obtaining module 11 continuously obtains the keyboard description information of the virtual input keyboard that is to be provided to the user; the second obtaining module 12 continuously according to said keyboard description information, obtains one or more keyboard objects corresponding to said virtual input keyboard and object resource information corresponding to each keyboard object, wherein at least one of the one or more keyboard objects comprises an input hot zone for receiving user input operations to trigger corresponding input event(s); the generating module 13 continuously generates said virtual input keyboard based on the one or more keyboard objects and object resource information corresponding to each keyboard object; and the providing module 14 continuously provides said generated virtual input keyboard to the user. The above respective modules work continuously and constantly between each other. Here, those skilled in the art should understand that "continuously" means the above respective modules perform obtaining keyboard description information of the virtual input keyboard to be provided to the user, obtaining one or more keyboard objects corresponding to the virtual input keyboard and the object resource information corresponding to each keyboard object, generating the virtual input keyboard, and providing the generated virtual input keyboard to the user according to a preset or real-time adjusted work pattern, respectively, till the providing apparatus 1 stops obtaining the keyboard description information of the virtual input keyboard provided to the user.

Compared with the prior art, by obtaining corresponding one or more keyboard objects and the object resource information corresponding to each keyboard object based on the keyboard description information of the virtual input keyboard, generating and providing the virtual input keyboard, the present invention makes it possible to adjust his/her virtual input keyboard, and thereby supporting to enhance the input efficiency and improve the user experience.

Preferably, the generating module 13 comprises:
an adaptation unit (not shown) configured to according to the predetermined object adaptation reference information, perform adaptation processing to the object resource information to obtain the adapted object resource information;
a generating unit (not shown) configured to generate said virtual input keyboard based on the one or more keyboard objects and the adapted object resource information.

Herein, the predetermined object adaptation reference information includes at least any one of the following:
- screen attribute information of a user equipment of the user, e.g., the length and width information of the screen of the server or terminal used by the user, etc.;
- object occupancy information of a keypad object corresponding to the object resource information, wherein the object occupancy information of the keyboard object includes, key location, size of the key occupancy area, shape, and other information.
- the virtual input keyboard layout information, e.g., the length and width information of the virtual input keyboard, location information of the virtual input keyboard, the number, kind, and location information of keys of the virtual input keyboard, etc.

Herein, the adaptation processing includes, but not limited to:

1) performing adaptation processing to the virtual input keyboard layout based on the screen attribute information, e.g., adapting the location, size, and shape of the virtual input keyboard based on the screen size;

2) performing adaptation processing to the object occupancy information of the keyboard object corresponding to the object resource information based on the virtual input keyboard layout information, e.g., when the size of the picture resource information corresponding to a key is larger than the occupancy area of the key on the virtual input keyboard, scaling down the picture resource information proportionally, such that the down-scaled picture resource information is consistent with the occupancy area of the key in the virtual input keyboard;

3) performing adaptation processing to the object resource information based on the user customized adaptation rule, so as to obtain the adapted object resource information, e.g., the user customized adaptation rule is adapting the key into a triangle.

For example, performing adaptation processing to the virtual input keyboard resource information based on predetermined virtual input keyboard resolution adaptation reference information, to generate the virtual input keyboard. The predetermined object adaptation reference information is: the resolution of the virtual keyboard is 240*400, the resolution of the screen is 480*800, the virtual input keyboard is located at the bottom of the screen; the resolution of the virtual input keyboard resource information is 480*800, and the adaption unit performs adaptation processing to the virtual input keyboard resource information based on the predetermined virtual input keyboard resolution adaptation reference information, e.g., scaling down the resolution of the virtual input keyboard resource information 480*800 into 1/2 of the original resolution, thereby obtaining that the resolution of the adapted virtual input keyboard resource information is 240*400; the generating unit generates the virtual input keyboard based on the one or more keyboard objects and the adapted virtual input keyboard resource information.

Those skilled in the art should understand that the above method of generating the virtual input keyboard by performing adaptation processing to the virtual input keyboard resource information based on predetermined virtual input keyboard resolution adaptation reference information is only exemplary, and other existing or future possibly developed method of performing adaptation processing to the object resource information based on the predetermined object adaptation reference information to obtain the adapted object resource information and generating the virtual input keyboard based on the one or more keyboard objects and the adapted object resource information, if applicable to the present invention, should also be included within the protection scope of the present invention and is incorporated here by reference.

The current implementation methods of a virtual input keyboard generally have a plurality of problems: for example, it is difficult to guarantee a uniform appearance of the virtual input keyboard on various platforms. For example, for different system platforms, a corresponding set of product will be developed with respect to each virtual input keyboard. Apparently, because each virtual input keyboard has more platform versions, it is hard to guarantee uniform appearance of the virtual input keyboard on respective platforms, e.g., the appearance of the virtual input keyboard developed on the mobile portable terminal, due to its limited screen size, might be unable to be uniform in appearance with the corresponding virtual input keyboard of a desktop compute. For another example, the repeated utilization of the virtual input keyboard resource is not high, such as, for skin resources of the virtual input keyboard developed for a desktop computer platform likely occupies a larger memory space, while these skin resources are likely unable to be directly used on the virtual input keyboard of the portable terminal without certain adaptation.

Here, by performing adaptation processing to the object resource information based on information such as screen attribute of the user equipment, the present embodiment enables the virtual input keyboard to maintain a uniform appearance on different platforms, which not only overcomes the above problem, but also avoids deterioration of the user's input efficiency due to keyboard layout difference caused by platform differences, which further enhances the user's input efficiency and promotes the user's input experience.

Preferably, the providing device 1 further comprises:
a third obtaining module (not shown) configured to obtain the user's input operation on the input hot zone;
a performing module (not shown) configured to perform a keyboard input operation corresponding to the input hot zone based on the input operation;
a displaying module (not shown) configured to provide the result of performing the keyboard input operation to the user.

For example, the input hot zone corresponding to key "A" of the virtual input keyboard includes displaying information STLiti "A" and the sound effect information "water dripping sound"; the user clicks onto the key "A" of the virtual input keyboard; the third obtaining module obtains that the user clicks onto the key "A"; the performing module performs a keyboard input operation corresponding to the input hot zone based on the input hot zone corresponding to the virtual input keyboard "A" , e.g., the display information of key "A" is popping up the STLiti "A," and the sound effect information is emitting a "water dripping sound"; and the displaying module provides the result of performing the keyboard input operation on the key "A" to the user, e.g., displaying the STLiti "A" on the screen and emitting the sound effect information "water dripping sound" .

Those skilled in the art should understand that the above method of obtaining the user's input operation on the input hot zone corresponding to the key "A" of the virtual input keyboard, performing a keyboard input operation corresponding to the input hot zone, and providing a result of performing the keyboard input operation to the user is only exemplary, and other existing or future possibly developed method of obtaining the user's input operation on the input hot zone, performing a keyboard input operation corresponding to the input hot zone based on the input operation, and providing the result of performing the keyboard input operation to the user, if applicable to the present invention, should also be included within the protection scope of the present invention and is incorporated here by reference.

More preferably, the providing apparatus 1 provides input prompt information corresponding to the input hot zone to the user based on the input operation;
wherein the input prompt information includes at least any one of the following:
- sound effect information corresponding to the input hot zone;
- display information corresponding to the input hot zone.

For example, the input prompt information for the input hot zone corresponding to key "A" of the virtual input keyboard includes display information "key 'A' slides from the top of the screen to a text input box of the virtual input keyboard" and sound effect information "drum sound"; the user clicks onto key "A" of the virtual input keyboard; the third obtaining module obtains that the user clicks onto the key "A"; the performing module performs a keyboard input operation corresponding to the input hot zone based on the input hot zone corresponding to the virtual input keyboard "A", for example, the input prompt information corresponding to the key "A" input hot zone includes display information "key 'A' slides from the top of the screen to a text input box of the virtual input keyboard" and sound effect information "drum sound"; the displaying module provides the key "A" and the input prompt information corresponding to the input hot zone to the user, such as displaying, on the screen, the display information key 'A' slides from the top of the screen to a text input box of the virtual input keyboard" and emitting the sound effect information "drum sound" .

Those skilled in the art can understand that the above method of providing the input prompt information corresponding to the input hot zone to the user based on the key "A" input operation is only exemplary, and other existing or future developed method of providing the input prompt information corresponding to the input hot zone to the user based on the input operation, if applicable to the present invention, should also be included within the protection scope of the present invention and is incorporated here by reference.

Preferably, the second obtaining module 12 comprises:
a keyboard object obtaining unit (not shown): configured to obtain the one or more keyboard objects based on the keyboard description information, wherein at least one of the one or more keyboard objects comprises an input hot zone for receiving user input operation to trigger corresponding input event(s);
an object resource information obtaining unit (not shown): configured to obtain the object resource information corresponding to the keyboard object based on the keyboard object.

For example, the keyboard description information includes: the path information for storing the virtual input keyboard is a local database of the providing apparatus 1; the path information for storing respective keys on the virtual input keyboard and the skins is a local database of the providing apparatus 1; the path information for storing the input prompt information corresponding to the input hot zone is a local database of the providing apparatus 1, etc.; the keyboard object obtaining unit obtains, based on the keyboard description information, the path information for storing the virtual input keyboard, the path information for storing respective keys on the virtual input keyboard and the skins, and the path information for storing the input prompt information corresponding to the input hot zone; the object resource information obtaining unit obtains, based on the keyboard object, the virtual input keyboard object resource information, the object resource information for the respective keys on the virtual input keyboard and the skins, and the object resource information corresponding to the input prompt information corresponding to the input hot zone from the local database, through the API of the local database of the providing device 1 or through function call.

Those skilled in the art can understand that the above method of obtaining the one or more keyboard objects based on the keyboard description information including the path information for storing the virtual input keyboard, the path information for storing respective keys on the virtual input keyboard and the skins, and the path information for storing the input prompt information corresponding to the input hot zone, and obtaining the object resource information corresponding to the keyboard object based on the keyboard object is only exemplary, and other existing or future possibly developed method of obtaining the one or more keyboard objects based on the keyboard description information, and obtaining the object resource information corresponding to the keyboard object based on the keyboard object, if applicable to the present invention, should also be included within the protection scope of the present invention, and is incorporated here by reference.

More preferably, the object resource information obtaining unit is configured to:
- obtain object resource combination information, wherein the object resource combination information is generated by combining candidate object resource information for generating the virtual input keyboard;
- extract the object resource information corresponding to the keyboard object from the object resource combination information based on the keyboard object.

Herein, the object resource combination includes combining one or more object resources into an object resource through a combining algorithm.

Herein, the object resource information obtaining unit may obtain or read into the memory a plurality of items of object resource information once for all.

For example, obtaining picture resource combining information, and extracting the object resource information corresponding to the keyboard object from the object resource combination information. for example, a picture resource M is generated by 9 candidate pictures M1-M9 for generating a virtual input keyboard through performing a minimal size combination; the object resource information obtaining unit obtains the object resource combining information that the picture resource M is object resource combination information formed by 9 candidate pictures M1-M9 for generating a virtual input keyboard, and obtains the candidate pictures M1-M9 object resource information from a local database based on the keyboard object through the API of the local database of the providing device 1 or function call.

Those skilled in the art can understand that the above method of obtaining picture resource combination information and extracting the object resource information corresponding to the keyboard object from the object resource combination information is only exemplary, and other existing or future possibly developed method of obtaining object resource combination information and extracting, based on the keyboard object, the object resource information corresponding to the keyboard object from the object resource combination information, if applicable to the present invention, should also be included within the protection scope of the present invention, and is incorporated here by reference.

Here, the present embodiment further enhances the communication or read efficiency by combining relevant resource information and obtaining or reading into the memory once for all.

More preferably, the object resource information obtaining unit is configured to:
- perform match query in a keyboard object resource repository based on the keyboard object so as to obtain the object resource information corresponding to the keyboard object.

Herein, the keyboard object resource repository includes, but not limited to, a software packet included in the virtual input keyboard, and a resource database included at the local and/or network end.

For example, based on the keyboard object ".com," match querying is performed in the software packet of the virtual input keyboard to obtain the object resource information corresponding to the keyboard object, e.g., the object resource information corresponding to ".com" includes picture file a and sound effect file b; the object resource information obtaining unit performs match query in the software packet of the virtual input keyboard through function call; if the picture file a and the sound effect file b are stored in the software packet of the virtual input keyboard, the obtain resource information obtaining unit obtains the picture file a and the sound effect file b corresponding to the keyboard object.

Those skilled in the art should understand that the above method of performing match query in the software packet of the virtual input keyboard based on the keyboard object ".com" to obtain the object resource information corresponding to the keyboard object is only exemplary, and other existing or future possibly developed method of performing match query in the keyboard object resource bank based on the keyboard object so as to obtain the object resource information corresponding to the keyboard object, if applicable to the present invention, should also be included within the protection scope of the present invention, and is incorporated here by reference.

Fig. 2 shows a schematic diagram of an apparatus for providing a virtual input keyboard according to one preferred embodiment of the present invention. Hereinafter, this preferred embodiment is described with reference to Fig. 2: specifically, a first obtaining module 11' obtains keyboard description information of a virtual input board that is to be provided to a user; a second obtaining module 12' according to said keyboard description information, obtains one or more keyboard objects corresponding to the virtual input keyboard and object resource information corresponding to each keyboard object, wherein at least one of the one or more keyboard objects comprises an input hot zone for receiving user input operations to trigger corresponding input event(s); a generating module 13' generates the virtual input keyboard based on the obtained one or more keyboard objects and the object resource information corresponding to each keyboard object; a providing module 14' provides the generated virtual input keyboard to the user; a fourth obtaining module 15' obtains the user's keyboard adjustment operation on the virtual input keyboard; and an updating module 16' according to said keyboard adjustment operation, updates one or more keyboard objects of the virtual input keyboard and object resource information corresponding to each keyboard object, wherein the first obtaining module 11', the second obtaining module 12', the generating module 13' and the providing module 14' are identical or similar to the corresponding apparatus in Fig. 1, which therefore will not be detailed here, but are incorporated here by reference.

Specifically, the fourth obtaining module 15' obtains the user's keyboard adjustment operation on the virtual input keyboard.

Herein, the keyboard adjustment operation comprises at least any one of the following:
- adjusting location information of at least one of the one or more keyboard objects;
- adjusting shape information of at least one of the one or more keyboard objects;
- adjusting the input event(s) corresponding to the input hot zone;
- adjusting object resource information corresponding to at least one of the one or more keyboard objects.

Herein, adjusting location information of at least one of the one or more keyboard objects comprises: a user may adjust a keyboard object location of a virtual input keyboard, e.g., the user may swap the positions of key "B" and key "A," or move the position of key "B" to a blank position. The blank position means a position on the virtual input key without disposing a key. Adjusting shape information of at least one of the one or more keyboard objects comprises: the user may adjust the shape of a keyboard object of the virtual input keyboard, e.g., the user may change key "A" from a rectangle to a round or to an irregular shape, etc.. Adjusting an input event corresponding to the input hot zone comprises: the input information and prompt information corresponding to the key may also be changed, e.g., the key ".com" may be adjusted to key ".net"; the sound effect information corresponding to key "A" is changed from "drum sound" to "water dripping sound," etc.. Adjusting object resource information corresponding to at least one of the one or more keyboard objects comprises: the picture and sound effect files corresponding to the keyboard object may also be varied, e.g., the user's picture for key "A" is changed from red to blue, and the sound effect file corresponding to "A" is changed from sound effect file a to sound effect file b, etc.

For example, the fourth obtaining module 15 obtains the user's ".com" adjusting operation on the virtual input keyboard. For example, the user adjusts the position of the key ".com" from the left bottom corner of the virtual input keyboard to the left upper corner; and adjusts the shape of the key ".com" from the rectangle to the round; and adjusts the input event (e.g., sound effect information) corresponding to the input hot zone of the key ".com" from the "water dripping sound" to "drum sound"; and adjusts the resource information for the key ".com" from the file "r" to the file "p" .

Those skilled in the art should understand that the above method of obtaining the user's ".com" adjustment operation on the virtual input keyboard is only exemplary, and other existing or future possibly developed method of obtaining the user's keyboard adjustment operation on the virtual input keyboard, if applicable for the present invention, should also be included within the protection scope of the present invention and is included here by reference.

The updating module 16' according to said keyboard adjustment operation, updates one or more keyboard objects of the virtual input keyboard and object resource information corresponding to each keyboard object, Wherein the providing apparatus 1 performs the operations performed by the generating module 13' and the providing module 14' based on the updated one or more keyboard objects of the virtual input keyboard and object resource information corresponding to each keyboard object.

For example, the user changes the rectangular "space key" on the virtual input keyboard into round, and the fourth obtaining module 15' obtains that the user needs to perform a keyboard adjustment operation of changing the rectangular "space key" on the virtual input keyboard into round, the updating module 16' updates the "space key" keyboard object of the virtual input keyboard and the corresponding object resource information, and the generating module 13' obtains the object resource information for the "space key" of the updated virtual input keyboard, and generates the virtual input keyboard; and the providing module 14' provides the virtual input keyboard to the user.

Those skilled in the art should understand that the above method of updating one or more keyboard objects of the virtual input keyboard and the corresponding object resource information based on the user's keyboard adjustment operation of changing the rectangular "space key" on the virtual input keyboard into round is only exemplary, and other existing or future possibly developed method of updating one or more keyboard objects of the virtual input keyboard and the corresponding object resource information based on the keyboard adjustment operation, if applicable for the present invention, should also be included within the protection scope of the present invention and is incorporated here by reference.

Here, by re-generating and providing the updated virtual input keyboard based on the user's adjustment operation on the virtual input keyboard, the present embodiment further enhances the user's input efficiency and improves the user's input experience.

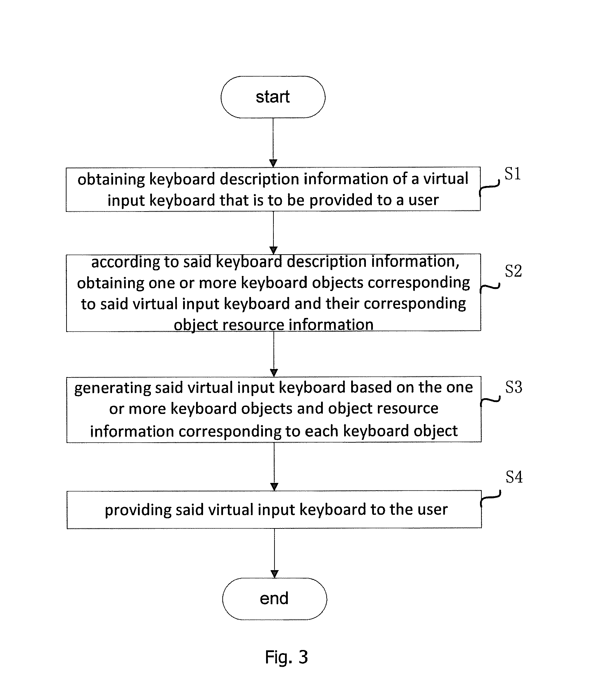

Fig. 3 shows a flow diagram of a computer-implemented method for providing a virtual input keyboard according to one aspect of the present invention. Here, the providing apparatus 1 implementing the method comprises a server and a terminal. When the providing apparatus 1 comprises a server, the providing device 1 includes, but not limited to a single host machine, a small machine, a large machine, a plurality of host clusters, a network host machine, a single network server, a plurality of network server clusters, or a cloud composed of a plurality of servers. Here, the cloud is composed of a great number of computers or network servers based on cloud computing, wherein the cloud computing is a kind of distributed computation, and is a super virtual computer composed of a group of loosely coupled computer clusters. When the providing apparatus 1 comprises a terminal, the providing device 1 is any terminal that may perform human-machine interaction with the user through a virtual input keyboard, e.g., various kinds of computer, smart phones, PDA, tablet computer, IPTV terminal, a set top box, a game machine, etc.

Herein, the providing apparatus 1 comprises a server and a terminal. When the providing apparatus 1 comprises a server, the providing device 1 includes, but not limited to a single host machine, a small machine, a large machine, a plurality of host clusters, a network host machine, a single network server, a plurality of network server clusters, or a cloud composed of a plurality of servers. Here, the cloud is composed of a great number of computers or network servers based on cloud computing, wherein the cloud computing is a kind of distributed computation, and is a super virtual computer composed of a group of loosely coupled computer clusters. When the providing apparatus 1 comprises a terminal, the providing device 1 is any terminal that may perform human-machine interaction with the user through a virtual input keyboard, e.g., various kinds of computer, smart phones, PDA, tablet computer, IPTV terminal, a set top box, a game machine, etc.

Specifically, in step S1, the providing apparatus 1 obtains keyboard description information of a virtual input keyboard that is to be provided to a user.

Herein, obtaining the keyboard description information includes, but not limited to:

1) relevant resource information, e.g., length and width information of a display screen for displaying a virtual input keyboard, various keys on the virtual input keyboard, and path information for storing skins, etc.;

2) virtual input keyboard layout information, e.g., length and width information of the virtual input keyboard, location information of the virtual input keyboard, numbers, kinds, and location information of keys of the virtual input keyboard, etc.

Herein, the manner of obtaining the keyboard description information includes, but not limited to:

1) obtaining locally: obtaining keyboard description information of a virtual input keyboard to be provided to the user from the local through an application program interface (API), or function invoking, or a local keyboard description information repository, wherein the local keyboard description information repository is used to store keyboard description information of the virtual input keyboard.

2) obtaining from the Internet: obtaining keyboard description information of the virtual input keyboard to be provided to the user from the Internet, through such as an application program interface (API), a remote process call protocol (RPC), or a network keyboard description information repository, or in an agreed communication manner such as HTTP, HTTPS, wherein the network keyboard description information repository is used to store keyboard description information of the virtual input keyboard.

For example, in step S1, the providing apparatus 1 obtains keyboard description information of the virtual input keyboard to be provided to the user from the local. When the virtual input keyboard is actuated, in step S1, the providing apparatus 1 obtains locally keyboard description information of the virtual input keyboard to be provided to the user through querying a local keyboard description information repository, e.g., the size of the virtual input keyboard is 90*120, the location is at the bottom of the display screen, and path information for storing resources corresponding to respective keys on the virtual input keyboard.

Those skilled in the art should understand that the aforesaid method of obtaining keyboard description information of a virtual input keyboard that is to be provided to the user from the local through querying a local keyboard description information repository is only exemplary, and other existing method of obtaining keyboard description information of a virtual input keyboard, or those that can possibly come out later should also be covered in the protection scope of the invention and included here in a way of quotation, if they are adaptable to this invention.

In step S2, the providing apparatus 1 according to said keyboard description information, obtains one or more keyboard objects corresponding to said virtual input keyboard and object resource information corresponding to each keyboard object, wherein at least one of the one or more keyboard objects comprises an input hot zone for receiving user input operations to trigger corresponding input event(s). Here, the "more" in the present invention means two or more.

Herein, the keyboard object comprise the type, size, skin, display area, input hot zone of the keys on the virtual input keyboard, e.g., the key is rectangular, the size is 25*20 pixels, the skin is red, the display area is the bottom of the display screen, and the input hot zone is "water dripping sound", etc. The input hot zone triggers a corresponding input operation based on the user input operation receiving. The corresponding input operation includes display information and sound effect information. For example, the input hot zone corresponding to the .com key is that when the user clicks onto the .com key, water dripping sound effect information will be emitted on the virtual input keyboard.

Herein, the object resource information comprises a picture file, a sound effect file, and the like corresponding to each keyboard object.

Herein, the manner of obtaining one or more keyboard objects corresponding to the virtual input keyboard and object resource information corresponding to each keyboard object includes, but not limited to:

1) obtaining locally: obtaining keyboard description information of a virtual input keyboard to be provided to the user from the local through an application program interface (API), or function invoking, or a local keyboard object resource repository, wherein the local keyboard object resource repository is used for storing the keyboard object and its corresponding object resource information.

2) obtaining from the Internet; obtaining keyboard description information of the virtual input keyboard to be provided to the user from the Internet, through such as an application program interface (API), a remote process call protocol (RPC), or a network keyboard object resource repository, or in an agreed communication manner such as HTTP, HTTPS, wherein the local keyboard object resource repository is used for storing the keyboard object and its corresponding object resource information.

For example, in step S2, the providing apparatus 1 obtains, from the network, one or more keyboard objects corresponding to the virtual input keyboard and their corresponding object resource information. When the virtual input keyboard is actuated, in step S1, the providing apparatus 1 obtains, from the network, keyboard description information of the virtual input keyboard to be provided to the user in an agreed communication manner such as HTTP, HTTPS, by querying a network keyboard object resource repository via an application program interface (API), e.g., the size of the virtual input keyboard is 90*120, the location is at the bottom of the display screen, and path information for storing resources corresponding to respective keys on the virtual input keyboard is the network keyboard object resource repository, etc.; and in step S2, the providing apparatus 1 obtains, from the network, one or more keyboard objects corresponding to the virtual input keyboard and their corresponding object resource information based on the obtained keyboard description information, in an agreed communication manner such as HTTP, HTTPS, and by querying the network keyboard object resource repository through the application program interface (API), e.g., obtaining the water dripping sound effect file s.mp3 of the input hot zone corresponding to the .com key.

Those skilled in the art should understand that the aforesaid method of obtaining one or more keyboard objects corresponding to the virtual input keyboard and object resource information corresponding to each keyboard object from the network by querying the network keyboard object resource repository is only exemplary, and other existing method of obtaining one or more keyboard objects corresponding to the virtual input keyboard and object resource information corresponding to each keyboard object base on the obtained keyboard description information, or those that can possibly come out later should also be covered in the protection scope of the invention and included here in a way of quotation, if they are adaptable to this invention.

In step S3, the providing apparatus 1 generates the virtual input keyboard based on the obtained one or more keyboard objects and object resource information corresponding to each keyboard object.

For example, the virtual input keyboard is generated based on the one or more keyboard objects and the object resource information corresponding to each keyboard object which are obtained from the network. In step S1, the providing apparatus 1 obtains, from the network, keyboard description information of the virtual input keyboard to be provided to the user in an agreed communication manner such as HTTP, HTTPS, by querying a network keyboard object resource repository via an application program interface (API), e.g., the size of the virtual input keyboard is 90*120, the location is at the bottom of the display screen, and path information for storing resources corresponding to respective keys on the virtual input keyboard is the network keyboard object resource repository, etc.; and in step S2, the providing apparatus 1 obtains, from the network, one or more keyboard objects corresponding to the virtual input keyboard and their corresponding object resource information based on the obtained keyboard description information, in an agreed communication manner such as HTTP, HTTPS, and by querying the network keyboard object resource repository through the application program interface (API), e.g., obtaining the water dripping sound effect file s.mp3 of the input hot zone corresponding to the .com key. In step S3, the providing apparatus 1 generates the virtual input keyboard based on the obtained one or more keyboard objects and their corresponding object resource information, e.g., in step S3, the providing apparatus 1 associates the input hot zone of the .com key with the water dripping sound effect file s.mp3, etc.

Those skilled in the art should understand that the aforesaid method of generating the virtual input keyboard based on the obtained one or more keyboard objects and object resource information corresponding to each keyboard object from the network is only exemplary, and other existing method of generating the virtual input keyboard based on the obtained one or more keyboard objects and object resource information corresponding to each keyboard object, or those that can possibly come out later should also be covered in the protection scope of the invention and included here in a way of quotation, if they are adaptable to this invention.

In step S4, the providing apparatus 1 provides the generated virtual input keyboard to the user.

Herein, the manner in which in step S4, the providing apparatus 1 provides the generated virtual input keyboard to the user includes, but not limited to:

1) locally providing. Presenting the locally generated virtual input keyboard on the display screen by invoking such as an application program interface (API) or invoking a graphical user interface (GUI), so as to provide which to the user.

2) network providing. Presenting the generated virtual input keyboard on the user equipment display screen from the network in an agreed communication manner such as HTTP, HTTPS via an application program interface (API) or a remote process call protocol (RPC), so as to provide which to the user, wherein the user equipment includes various computers, smart phones, PDA, tablet computer, IPTV terminal, set top box, game machine, etc.

For example, in step S4, the providing apparatus 1 presents the the generated virtual input keyboard on the display screen by invoking the graphical user interface (GUI) via local provision, so as to provide which to the user.

Those skilled in the art should understand that the above method of providing locally the generated virtual input keyboard is only exemplary, and other existing method of providing the generated virtual input keyboard, or those that can possibly come out later should also be covered in the protection scope of the invention and included here in a way of quotation, if they are adaptable to this invention.

Preferably, the respective steps of the providing apparatus 1 work continuously between each other. Specifically, in step S1, the providing apparatus 1 continuously obtains the keyboard description information of the virtual input keyboard that is to be provided to the user; in step S2, the providing apparatus 1 continuously according to said keyboard description information, obtains one or more keyboard objects corresponding to said virtual input keyboard and object resource information corresponding to each keyboard object, wherein at least one of the one or more keyboard objects comprises an input hot zone for receiving user input operations to trigger corresponding input event(s); in step S3, the providing apparatus 1 continuously generates said virtual input keyboard based on the one or more keyboard objects and object resource information corresponding to each keyboard object; and in step S4, the providing apparatus 1 continuously provides said generated virtual input keyboard to the user. The above respective modules work continuously and constantly between each other. Here, those skilled in the art should understand that "continuously" means the above respective steps perform obtaining keyboard description information of the virtual input keyboard to be provided to the user, obtaining one or more keyboard objects corresponding to the virtual input keyboard and the object resource information corresponding to each keyboard object, generating the virtual input keyboard, and providing the generated virtual input keyboard to the user according to a preset or real-time adjusted work pattern, respectively, till the providing apparatus 1 stops obtaining the keyboard description information of the virtual input keyboard provided to the user.

Compared with the prior art, by obtaining corresponding one or more keyboard objects and the object resource information corresponding to each keyboard object based on the keyboard description information of the virtual input keyboard, generating and providing the virtual input keyboard, the present invention makes it possible to adjust his/her virtual input keyboard, and thereby supporting to enhance the input efficiency and improve the user experience.

Preferably, the step S3 comprises:
S3a (not shown), according to the predetermined object adaptation reference information, performing adaptation processing to the object resource information to obtain the adapted object resource information;
S3b (not shown), generating said virtual input keyboard based on the one or more keyboard objects and the adapted object resource information.

Herein, the predetermined object adaptation reference information includes at least any one of the following:
- screen attribute information of a user equipment of the user, e.g., the length and width information of the screen of the server or terminal used by the user, etc.;
- object occupancy information of a keypad object corresponding to the object resource information, wherein the object occupancy information of the keyboard object includes, key location, size of the key occupancy area, shape, and other information.
- the virtual input keyboard layout information, e.g., the length and width information of the virtual input keyboard, location information of the virtual input keyboard, the number, kind, and location information of keys of the virtual input keyboard, etc.

Herein, the adaptation processing includes, but not limited to:
1) performing adaptation processing to the virtual input keyboard layout based on the screen attribute information, e.g., adapting the location, size, and shape of the virtual input keyboard based on the screen size;
2) performing adaptation processing to the object occupancy information of the keyboard object corresponding to the object resource information based on the virtual input keyboard layout information, e.g., when the size of the picture resource information corresponding to a key is larger than the occupancy area of the key on the virtual input keyboard, scaling down the picture resource information proportionally, such that the down-scaled picture resource information is consistent with the occupancy area of the key in the virtual input keyboard;
3) performing adaptation processing to the object resource information based on the user customized adaptation rule, so as to obtain the adapted object resource information, e.g., the user customized adaptation rule is adapting the key into a triangle.

For example, performing adaptation processing to the virtual input keyboard resource information based on predetermined virtual input keyboard resolution adaptation reference information, to generate the virtual input keyboard. The predetermined object adaptation reference information is: the resolution of the virtual keyboard is 240*400, the resolution of the screen is 480*800, the virtual input keyboard is located at the bottom of the screen; the resolution of the virtual input keyboard resource information is 480*800, and in step S3a, the providing apparatus 1 performs adaptation processing to the virtual input keyboard resource information based on the predetermined virtual input keyboard resolution adaptation reference information, e.g., scaling down the resolution of the virtual input keyboard resource information 480*800 into 1/2 of the original resolution, thereby obtaining that the resolution of the adapted virtual input keyboard resource information is 240*400; in step S3b, the providing apparatus 1 generates the virtual input keyboard based on the one or more keyboard objects and the adapted virtual input keyboard resource information.

Those skilled in the art should understand that the above method of generating the virtual input keyboard by performing adaptation processing to the virtual input keyboard resource information based on predetermined virtual input keyboard resolution adaptation reference information is only exemplary, and other existing or future possibly developed method of performing adaptation processing to the object resource information based on the predetermined object adaptation reference information to obtain the adapted object resource information and generating the virtual input keyboard based on the one or more keyboard objects and the adapted object resource information, if applicable to the present invention, should also be included within the protection scope of the present invention and is incorporated here by reference.

The current implementation methods of a virtual input keyboard generally have a plurality of problems: for example, it is difficult to guarantee a uniform appearance of the virtual input keyboard on various platforms. For example, for different system platforms, a corresponding set of product will be developed with respect to each virtual input keyboard. Apparently, because each virtual input keyboard has more platform versions, it is hard to guarantee uniform appearance of the virtual input keyboard on respective platforms, e.g., the appearance of the virtual input keyboard developed on the mobile portable terminal, due to its limited screen size, might be unable to be uniform in appearance with the corresponding virtual input keyboard of a desktop compute. For another example, the repeated utilization of the virtual input keyboard resource is not high, such as, for skin resources of the virtual input keyboard developed for a desktop computer platform likely occupies a larger memory space, while these skin resources are likely unable to be directly used on the virtual input keyboard of the portable terminal without certain adaptation.

Here, by performing adaptation processing to the object resource information based on information such as screen attribute of the user equipment, the present embodiment enables the virtual input keyboard to maintain a uniform appearance on different platforms, which not only overcomes the above problem, but also avoids deterioration of the user's input efficiency due to keyboard layout difference caused by platform differences, which further enhances the user's input efficiency and promotes the user's input experience.

Preferably, the method further comprises:
the step S10 (not shown): obtaining the user's input operation on the input hot zone;
the step S11 (not shown) : performing a keyboard input operation corresponding to the input hot zone based on the input operation;
the step S12 (not shown) : providing the result of performing the keyboard input operation to the user.

For example, the input hot zone corresponding to key "A" of the virtual input keyboard includes displaying information STLiti "A" and the sound effect information "water dripping sound"; the user clicks onto the key "A" of the virtual input keyboard; in step S10, the providing apparatus 1 obtains that the user clicks onto the key "A"; in step S11, the providing apparatus 1 performs a keyboard input operation corresponding to the input hot zone based on the input hot zone corresponding to the virtual input keyboard "A" , e.g., the display information of key "A" is popping up the STLiti "A, " and the sound effect information is emitting a "water dripping sound"; and in step S12, the providing apparatus 1 provides the result of performing the keyboard input operation on the key "A" to the user, e.g., displaying the STLiti "A" on the screen and emitting the sound effect information "water dripping sound".

Those skilled in the art should understand that the above method of obtaining the user's input operation on the input hot zone corresponding to the key "A" of the virtual input keyboard, performing a keyboard input operation corresponding to the input hot zone, and providing a result of performing the keyboard input operation to the user is only exemplary, and other existing or future possibly developed method of obtaining the user's input operation on the input hot zone, performing a keyboard input operation corresponding to the input hot zone based on the input operation, and providing the result of performing the keyboard input operation to the user, if applicable to the present invention, should also be included within the protection scope of the present invention and is incorporated here by reference.

More preferably, the providing apparatus 1 provides input prompt information corresponding to the input hot zone to the user based on the input operation; wherein the input prompt information includes at least any one of the following:
- sound effect information corresponding to the input hot zone;
- display information corresponding to the input hot zone.

For example, the input prompt information for the input hot zone corresponding to key "A" of the virtual input keyboard includes display information "key 'A' slides from the top of the screen to a text input box of the virtual input keyboard" and sound effect information "drum sound"; the user clicks onto key "A" of the virtual input keyboard; in step S10, the providing apparatus 1 obtains that the user clicks onto the key "A"; in step S11, the providing apparatus 1 performs a keyboard input operation corresponding to the input hot zone based on the input hot zone corresponding to the virtual input keyboard "A", for example, the input prompt information corresponding to the key "A" input hot zone includes display information "key 'A' slides from the top of the screen to a text input box of the virtual input keyboard" and sound effect information "drum sound"; in step S12, the providing apparatus 1 provides the key "A" and the input prompt information corresponding to the input hot zone to the user, such as displaying, on the screen, the display information key 'A' slides from the top of the screen to a text input box of the virtual input keyboard" and emitting the sound effect information "drum sound" .

Those skilled in the art can understand that the above method of providing the input prompt information corresponding to the input hot zone to the user based on the key "A" input operation is only exemplary, and other existing or future developed method of providing the input prompt information corresponding to the input hot zone to the user based on the input operation, if applicable to the present invention, should also be included within the protection scope of the present invention and is incorporated here by reference.

Preferably, the step S2 comprises:
S2a (not shown): obtaining the one or more keyboard objects based on the keyboard description information, wherein at least one of the one or more keyboard objects comprises an input hot zone for receiving user input operation to trigger corresponding input event(s);
S2b (not shown): obtaining the object resource information corresponding to the keyboard object based on the keyboard object.

For example, the keyboard description information includes: the path information for storing the virtual input keyboard is a local database of the providing apparatus 1; the path information for storing respective keys on the virtual input keyboard and the skins is a local database of the providing apparatus 1; the path information for storing the input prompt information corresponding to the input hot zone is a local database of the providing apparatus 1, etc.; in step S2a, the providing apparatus 1 obtains, based on the keyboard description information, the path information for storing the virtual input keyboard, the path information for storing respective keys on the virtual input keyboard and the skins, and the path information for storing the input prompt information corresponding to the input hot zone; in step S2b, the providing apparatus 1 obtains, based on the keyboard object, the virtual input keyboard object resource information, the object resource information for the respective keys on the virtual input keyboard and the skins, and the object resource information corresponding to the input prompt information corresponding to the input hot zone from the local database, through the API of the local database of the providing device 1 or through function call.

Those skilled in the art can understand that the above method of obtaining the one or more keyboard objects based on the keyboard description information including the path information for storing the virtual input keyboard, the path information for storing respective keys on the virtual input keyboard and the skins, and the path information for storing the input prompt information corresponding to the input hot zone, and obtaining the object resource information corresponding to the keyboard object based on the keyboard object is only exemplary, and other existing or future possibly developed method of obtaining the one or more keyboard objects based on the keyboard description information, and obtaining the object resource information corresponding to the keyboard object based on the keyboard object, if applicable to the present invention, should also be included within the protection scope of the present invention, and is incorporated here by reference.

More preferably, in step S2b, the providing apparatus 1 is configured to:
- obtain object resource combination information, wherein the object resource combination information is generated by combining candidate object resource information for generating the virtual input keyboard;
- extract the object resource information corresponding to the keyboard object from the object resource combination information based on the keyboard object.

Herein, the object resource combination includes combining one or more object resources into an object resource through a combining algorithm.

Herein, in step S2b, the providing apparatus 1 may obtain or read into the memory a plurality of items of object resource information once for all.

For example, obtaining picture resource combining information, and extracting the object resource information corresponding to the keyboard object from the object resource combination information. for example, a picture resource M is generated by 9 candidate pictures M1-M9 for generating a virtual input keyboard through performing a minimal size combination; in step S2b, the providing apparatus 1 obtains the object resource combining information that the picture resource M is object resource combination information formed by 9 candidate pictures M1-M9 for generating a virtual input keyboard, and obtains the candidate pictures M1-M9 object resource information from a local database based on the keyboard object through the API of the local database of the providing device 1 or function call.

Those skilled in the art can understand that the above method of obtaining picture resource combination information and extracting the object resource information corresponding to the keyboard object from the object resource combination information is only exemplary, and other existing or future possibly developed method of obtaining object resource combination information and extracting, based on the keyboard object, the object resource information corresponding to the keyboard object from the object resource combination information, if applicable to the present invention, should also be included within the protection scope of the present invention, and is incorporated here by reference.

Here, the present embodiment further enhances the communication or read efficiency by combining relevant resource information and obtaining or reading into the memory once for all.

More preferably, in step S2b, the providing apparatus 1 is configured to:
- perform match query in a keyboard object resource repository based on the keyboard object so as to obtain the object resource information corresponding to the keyboard object.

Herein, the keyboard object resource repository includes, but not limited to, a software packet included in the virtual input keyboard, and a resource database included at the local and/or network end.

For example, based on the keyboard object ".com," match querying is performed in the software packet of the virtual input keyboard to obtain the object resource information corresponding to the keyboard object, e.g., the object resource information corresponding to ".com" includes picture file a and sound effect file b; in step S2b, the providing apparatus 1 performs match query in the software packet of the virtual input keyboard through function call; if the picture file a and the sound effect file b are stored in the software packet of the virtual input keyboard, the obtain resource information obtaining unit obtains the picture file a and the sound effect file b corresponding to the keyboard object.

Those skilled in the art should understand that the above method of performing match query in the software packet of the virtual input keyboard based on the keyboard object ".com" to obtain the object resource information corresponding to the keyboard object is only exemplary, and other existing or future possibly developed method of performing match query in the keyboard object resource bank based on the keyboard object so as to obtain the object resource information corresponding to the keyboard object, if applicable to the present invention, should also be included within the protection scope of the present invention, and is incorporated here by reference.

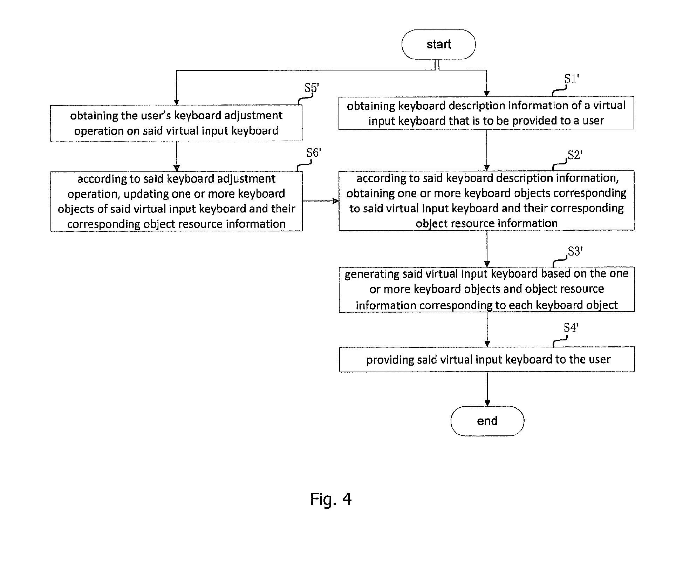

Fig. 4 shows a flow diagram of a computer-implemented method for providing a virtual input keyboard according to one aspect of the present invention. Hereinafter, this preferred embodiment is described with reference to Fig. 4: specifically, in step S1', the providing apparatus 1 obtains keyboard description information of a virtual input board that is to be provided to a user; in step S2', the providing apparatus 1 according to said keyboard description information, obtains one or more keyboard objects corresponding to the virtual input keyboard and object resource information corresponding to each keyboard object, wherein at least one of the one or more keyboard objects comprises an input hot zone for receiving user input operations to trigger corresponding input event(s); in step S3', the providing apparatus 1 generates the virtual input keyboard based on the obtained one or more keyboard objects and the object resource information corresponding to each keyboard object; in step S4', the providing apparatus 1 provides the generated virtual input keyboard to the user; in step S5', the providing apparatus 1 obtains the user's keyboard adjustment operation on the virtual input keyboard; and in step S6', the providing apparatus 1 according to said keyboard adjustment operation, updates one or more keyboard objects of the virtual input keyboard and object resource information corresponding to each keyboard object, wherein the step S1', the step S2', the step S3' and the step S4' are identical or similar to the corresponding step in Fig. 3, which therefore will not be detailed here, but are incorporated here by reference.

Specifically, in step S5', the providing apparatus 1 obtains the user's keyboard adjustment operation on the virtual input keyboard.

Herein, the keyboard adjustment operation comprises at least any one of the following:
- adjusting location information of at least one of the one or more keyboard objects;
- adjusting shape information of at least one of the one or more keyboard objects;
- adjusting the input event(s) corresponding to the input hot zone;
- adjusting object resource information corresponding to at least one of the one or more keyboard objects.

Herein, adjusting location information of at least one of the one or more keyboard objects comprises: a user may adjust a keyboard object location of a virtual input keyboard, e.g., the user may swap the positions of key "B" and key "A," or move the position of key "B" to a blank position. The blank position means a position on the virtual input key without disposing a key. Adjusting shape information of at least one of the one or more keyboard objects comprises: the user may adjust the shape of a keyboard object of the virtual input keyboard, e.g., the user may change key "A" from a rectangle to a round or to an irregular shape, etc.. Adjusting an input event corresponding to the input hot zone comprises: the input information and prompt information corresponding to the key may also be changed, e.g., the key ".com" may be adjusted to key ".net"; the sound effect information corresponding to key "A" is changed from "drum sound" to "water dripping sound," etc.. Adjusting object resource information corresponding to at least one of the one or more keyboard objects comprises: the picture and sound effect files corresponding to the keyboard object may also be varied, e.g., the user's picture for key "A" is changed from red to blue, and the sound effect file corresponding to "A" is changed from sound effect file a to sound effect file b, etc.

For example, the fourth obtaining module 15 obtains the user's ".com" adjusting operation on the virtual input keyboard. For example, the user adjusts the position of the key ".com" from the left bottom corner of the virtual input keyboard to the left upper corner; and adjusts the shape of the key ".com" from the rectangle to the round; and adjusts the input event (e.g., sound effect information) corresponding to the input hot zone of the key ".com" from the "water dripping sound" to "drum sound"; and adjusts the resource information for the key ".com" from the file "r" to the file "p" .

Those skilled in the art should understand that the above method of obtaining the user's ".com" adjustment operation on the virtual input keyboard is only exemplary, and other existing or future possibly developed method of obtaining the user's keyboard adjustment operation on the virtual input keyboard, if applicable for the present invention, should also be included within the protection scope of the present invention and is included here by reference.

In step S6', the providing apparatus 1 according to said keyboard adjustment operation, updates one or more keyboard objects of the virtual input keyboard and object resource information corresponding to each keyboard object, Wherein the providing apparatus 1 performs the operations performed by in step S3', and in step S4', based on the updated one or more keyboard objects of the virtual input keyboard and object resource information corresponding to each keyboard object.

For example, the user changes the rectangular "space key" on the virtual input keyboard into round, and in step S5', the providing apparatus 1 obtains that the user needs to perform a keyboard adjustment operation of changing the rectangular "space key" on the virtual input keyboard into round, in step S6', the providing apparatus 1 updates the "space key" keyboard object of the virtual input keyboard and the corresponding object resource information, and in step S3, the providing apparatus 1' obtains the object resource information for the "space key" of the updated virtual input keyboard, and generates the virtual input keyboard; and in step S4, the providing apparatus 1 provides the virtual input keyboard to the user.

Those skilled in the art should understand that the above method of updating one or more keyboard objects of the virtual input keyboard and the corresponding object resource information based on the user's keyboard adjustment operation of changing the rectangular "space key" on the virtual input keyboard into round is only exemplary, and other existing or future possibly developed method of updating one or more keyboard objects of the virtual input keyboard and the corresponding object resource information based on the keyboard adjustment operation, if applicable for the present invention, should also be included within the protection scope of the present invention and is incorporated here by reference.

Here, by re-generating and providing the updated virtual input keyboard based on the user's adjustment operation on the virtual input keyboard, the present embodiment further enhances the user's input efficiency and improves the user's input experience.

To those skilled in the art, it is apparent that the present invention is not limited to the details of the above exemplary embodiments, and the present invention may be implemented with other embodiments without departing from the spirit or basic features of the present invention. Thus, in any way, the embodiments should be regarded as exemplary, not limitative; the scope of the present invention is limited by the appended claims, instead of the above depiction. Thus, all variations intended to fall into the meaning and scope of equivalent elements of the claims should be covered within the present invention. No reference signs in the claims should be regarded as limiting the involved claims. Besides, it is apparent that the term "comprise" does not exclude other units or steps, and singularity does not exclude plurality. A plurality of units or modules stated in a system claim may also be implemented by a single unit or module through software or hardware. Terms such as the first and the second are used to indicate names, but do not indicate any particular sequence.

## Claims

1. A computer-implemented method for providing a virtual input keyboard, wherein the method comprises the following steps of:
a. obtaining keyboard description information of a virtual input keyboard that is to be provided to a user;
b. according to said keyboard description information, obtaining one or more keyboard objects corresponding to said virtual input keyboard and object resource information corresponding to each keyboard object, wherein at least one of the one or more keyboard objects comprises an input hot zone for receiving user input operations to trigger corresponding input event(s);
c. generating said virtual input keyboard based on the one or more keyboard objects and object resource information corresponding to each keyboard object;
d. providing said virtual input keyboard to the user.

2. The method according to claim 1, wherein the step c comprises:
- according to the predetermined object adaptation reference information, performing adaptation processing to the object resource information to obtain the adapted object resource information;
- generating said virtual input keyboard based on the one or more keyboard objects and the adapted object resource information.

3. The method according to claim 2, wherein the predetermined object adaptation reference information comprises at least anyone of the following:
- screen attribute of a user equipment of the user;
- object occupancy information of a keyboard object corresponding to the object resource information.

4. The method according to any one of claims 1 to 3, wherein the method further comprises:
- obtaining the user's input operation on the input hot zone;
- performing a keyboard input operation corresponding to the input hot zone based on the input operation;
- providing a result of performing the keyboard input operation to the user.

5. The method according to claim 4, wherein the method further comprises:
- according to the input operation, providing input prompt information corresponding to the input hot zone to the user;
wherein said input prompt information includes at least any one of the following:
- sound effect information corresponding to the input hot zone;
- display information corresponding to the input hot zone.

6. The method according to any one of claims 1 to 5, wherein the method further comprises:
- obtaining the user's keyboard adjustment operation on said virtual input keyboard;
- according to said keyboard adjustment operation, updating one or more keyboard objects of said virtual input keyboard and object resource information corresponding to each keyboard object;
- according to the updated one or more keyboard objects and object resource information corresponding to each keyboard object, performing the step c and the step d.

7. The method according to claim 6, wherein said keyboard adjustment operation comprises at least any one of the following:
- adjusting location information of at least one of the one or more keyboard objects;
- adjusting shape information of at least one of the one or more keyboard objects;
- adjusting the input event(s) corresponding to the input hot zone;
- adjusting object resource information corresponding to at least one of the one or more keyboard objects.

8. The method according to any one of claims 1 to 7, wherein the step b comprises:
- obtaining the one or more keyboard objects based on said keyboard description information, wherein at least one of the one or more keyboard objects comprises an input hot zone for receiving user input operation to trigger corresponding input event(s);
b1 obtaining the object resource information corresponding to the keyboard object based on the keyboard object.

9. The method according to claim 8, wherein the step b1 comprises:
- obtaining object resource combination information, wherein said object resource combination information is generated by combining candidate object resource information for generating the virtual input keyboard;
- extracting the object resource information corresponding to the keyboard object from said object resource combination information based on the keyboard object.

10. The method according to claim 8, wherein the step b1 comprises:
- performing match query in a keyboard object resource repository based on the keyboard object, to obtain the object resource information corresponding to the keyboard object.

11. An apparatus for providing a virtual input keyboard, wherein the apparatus comprises:
a first obtaining module configured to obtain keyboard description information of a virtual input keyboard that is to be provided to a user;
a second obtaining module configured to, according to said keyboard description information, obtain one or more keyboard objects corresponding to said virtual input keyboard and object resource information corresponding to each keyboard object, wherein at least one of the one or more keyboard objects comprises an input hot zone for receiving user input operations to trigger corresponding input event(s);
a generating module configured to generate said virtual input keyboard based on the one or more keyboard objects and object resource information corresponding to each keyboard object;
a providing module configured to provide said virtual input keyboard to the user.

12. The apparatus according to claim 11, wherein the generating module comprises:
an adaptation unit configured to, according to the predetermined object adaptation reference information, perform adaptation processing to the object resource information to obtain the adapted object resource information;
a generating unit configured to generate said virtual input keyboard based on the one or more keyboard objects and the adapted object resource information.

13. The apparatus according to claim 12, wherein the predetermined object adaptation reference information comprises at least any one of the following:
- screen attribute of a user equipment of the user;
- object occupancy information of a keyboard object corresponding to the object resource information.

14. The apparatus according to any one of claims 11 to 13, wherein the apparatus further comprises:
a third obtaining module configured to obtain the user's input operation on the input hot zone;
a performing module configured to perform a keyboard input operation corresponding to the input hot zone based on the input operation;
a displaying module configured to provide a result of performing the keyboard input operation to the user.

15. The apparatus according to claim 14, wherein the apparatus is configured to, according to the input operation, provide input prompt information corresponding to the input hot zone to the user;
wherein said input prompt information includes at least any one of the following:
- sound effect information corresponding to the input hot zone;
- display information corresponding to the input hot zone.

16. The apparatus according to any one of claims 11 to 15, wherein the apparatus further comprises:
a fourth obtaining module configured to obtain the user's keyboard adjustment operation on said virtual input keyboard;
an updating module configured to, according to said keyboard adjustment operation, update one or more keyboard objects of said virtual input keyboard and object resource information corresponding to each keyboard object;
wherein the apparatus performs the operations performed by the generating module and the providing module based on the updated one or more keyboard objects and object resource information corresponding to each keyboard object.

17. The apparatus according to claim 16, wherein said keyboard adjustment operation comprises at least any one of the following:
- adjusting location information of at least one of the one or more keyboard objects;
- adjusting shape information of at least one of the one or more keyboard objects;
- adjusting the input event(s) corresponding to the input hot zone;
- adjusting object resource information corresponding to at least one of the one or more keyboard objects.

18. The apparatus according to any one of claims 11 to 17, wherein the second obtaining module comprises:
a keyboard object obtaining unit configured to obtain the one or more keyboard objects based on said keyboard description information, wherein at least one of the one or more keyboard objects comprises an input hot zone for receiving user input operation to trigger corresponding input event(s);
an object resource information obtaining unit configured to obtain the object resource information corresponding to the keyboard object based on the keyboard object.

19. The apparatus according to claim 18, wherein the object resource information obtaining unit is further configured to:
obtain object resource combination information, wherein said object resource combination information is generated by combining candidate object resource information for generating the virtual input keyboard;
extract the object resource information corresponding to the keyboard object from said object resource combination information based on the keyboard object.

20. The apparatus according to claim 18, wherein the object resource information obtaining unit is further configured to perform match query in a keyboard object resource repository based on the keyboard object, to obtain the object resource information corresponding to the keyboard object.
